# EUROPÄISCHE PATENTSCHRIFT

(11) **EP 3 234 684 B1**
(45) Veröffentlichungstag und Bekanntmachung des Hinweises auf die Patenterteilung: **06.05.2020**
(21) Anmeldenummer: 15801674.1
(22) Anmeldetag: 20.11.2015
(51) Int. Cl.: G02B 27/01, G02B 27/00, B60J 3/00, B60J 3/02

(54) **VERFAHREN ZUM VERRINGERN EINER REFLEXION BEIM BETREIBEN EINES HEAD UP-DISPLAYS EINES KRAFTFAHRZEUGS**
METHOD FOR REDUCING REFLECTION WHEN OPERATING A HEAD-UP DISPLAY OF A MOTOR VEHICLE
PROCÉDÉ DE RÉDUCTION D'UNE RÉFLEXION LORS DU FONCTIONNEMENT D'UN AFFICHAGE TÊTE HAUTE D'UN VÉHICULE AUTOMOBILE

(30) Priorität: 19.12.2014 DE 102014019160
(43) Veröffentlichungstag der Anmeldung: 25.10.2017
(73) Patentinhaber: Audi AG, 85045 Ingolstadt (DE)
(72) Erfinder: WUNDERLICH, Matthias, 85053 Ingolstadt (DE)
(86) Internationale Anmeldenummer: PCT/EP2015/002337
(87) Internationale Veröffentlichungsnummer: WO 2016/096079

(56) Entgegenhaltungen:
- DE-A1-102004 007 521
- JP-A- 2005 035 406
- JP-A- 2008 268 883
- US-A1- 2003 169 213
- US-A1- 2014 307 324

## Beschreibung

Die Erfindung betrifft ein Verfahren zum Verringern einer Reflexion beim Betreiben eines Head-up-Displays eines Kraftfahrzeugs. Das Head-up-Display umfasst dabei ein Deckscheibenelement und ein Abblendelement, wobei das Abblendelement zum Abblenden eines von dem Deckscheibenelement umgelenkten Lichtstrahls eines Umgebungslichts des Kraftfahrzeugs ausgelegt ist und beispielsweise eine Spiegelbank umfassen kann.

Head-up-Displays werden in Kraftfahrzeugen verwendet, um dem Fahrzeugführer Informationen direkt ins Sichtfeld zu stellen. Ein Head-up-Display ist eine Anzeigevorrichtung, die eine digitale graphische Information, also ein virtuelles Bild, auf eine Reflexionsfläche im Kraftfahrzeug, beispielsweise auf eine Windschutzscheibe, in das Sichtfeld eines Benutzers projiziert, sodass der Benutzer seine Kopfhaltung und Blickrichtung beibehalten kann. Dabei wird mittels verschieden ausgelegter Spiegel das virtuelle Bild scheinbar auf die Straße gelegt.

Um bei dem Head-up-Display und der damit verbundenen Bildinformation einen ausreichenden Schutz vor Reflexionen durch beispielsweise Sonneneinstrahlung, die von dem Deckscheibenelement und der Windschutzscheibe in ein Auge des Benutzers abgelenkt werden kann, bereit zu stellen, ist an dem Head-up-Display eine Spiegelbank vorgesehen, welche einen Reflexionsbereich um einen Augpunkt, also um ein Auge des Fahrers, abschirmt. Um den Augpunkt wird dabei ein reflexionsfreier Bereich definiert, also ein von dem umgelenkten Lichtstrahl freizuhaltender Bereich. Die Spiegelbankinnenseite ist meist schwarz-matt ausgestaltet, um das Licht zu absorbieren. Das Deckscheibenelement, das beispielsweise eine Deckscheibe umfassen kann, dient dabei zum Schutz des Head-up-Displays und, zusammen mit der Spiegelbank, als Lichtfalle. Somit haben Augpunkt, Deckscheibe und die Scheibenform des Kraftfahrzeugs einen Einfluss auf die Position und Ausrichtung, in der die Spiegelbank verbaut wird.

Um ein Umgebungslicht des Kraftfahrzeugs abzulenken, schlägt die DE 10 2008 015 997 A1 ein Head-up-Display vor, bei dem das virtuelle, zu projizierende Bild vor der Projektion an die Windschutzscheibe durch eine zylindrische Linse läuft. Die Linse ist gegenüber dem Projektionslicht geneigt ist, um das Umgebungslicht abzulenken.

Aus der US 2011/0007399 A1 ist ein Head-up-Display bekannt, dessen optisches System einen vorbestimmten Grad an Chromatisierung aufweist. Dies führt zu einer Reduktion des Sonnenlichts auf der Windschutzscheibe. Kraftfahrzeugexternes Licht wird dabei durch eine Oberfläche eines Prismas reflektiert oder abgelenkt, um ein Auftreten eines Geisterbildes durch das externe Licht zu verhindern.

Eine Integration des Head-up-Displays unter vorgegebenen technischen Maßgaben in ein vorhandenes Cockpit ist jedoch oft mit designtechnischen Zugeständnissen verbunden. So sind in vielen Fällen das Head-up-Display und besonders die Spiegelbank hinter dem Hutzenbereich vollständig beziehungsweise teilweise sichtbar. Dies ist aus Fahrersicht und designtechnisch nicht wünschenswert, da der Fahrer in eine Art Loch hineinschaut. Dies ist bedingt durch eine Negativstellung der Spiegelbank und der schwarz-matten Oberfläche. Eine Konstruktion gemäß dem Stand der Technik kann von dem Benutzer als störend empfunden werden, jedoch lässt sich das Head-up-Display bisher nicht in einem anderen Bauraum unterbringen.

Eine der Erfindung zugrundeliegende Aufgabe ist das Ermöglichen einer bauraumunabhängigen Konstruktion für ein Head-up-Display.

Die Aufgabe wird von dem erfindungsgemäßen Verfahren, dem erfindungsgemäßen Head-up-Display und dem erfindungsgemäßen Kraftfahrzeug gemäß den unabhängigen Patentansprüchen gelöst. Vorteilhafte Weiterbildungen der Erfindung sind durch die Unteransprüche gegeben.

Die Erfindung basiert auf der Idee, ein Head-up-Display bereitzustellen, das ein verstellbares oder verfahrbares Abblendelement umfasst. In Abhängigkeit davon, ob ein umgelenkter Lichtstrahl eines Umgebungslichts, beispielsweise des Sonnenlichts, durch den freizuhaltenden Bereich führt, kann eine Abblendposition des Abblendelements eingestellt werden. Das Abblendelement muss dadurch also nur im Bedarfsfall, das heißt wenn tatsächlich ein Blenden des Fahrerauges möglich ist, in eine Position zum Abblenden gebracht werden. Ein solches variables Abblendelement kann auch in anderen Schalttafeln des Kraftfahrzeugs verbaut werden, ohne dass sie dabei konstruktiv neu gestaltet werden muss. Dadurch ist es auch möglich, den reflexionsfreien Bereich variabel zu gestalten.

Das erfindungsgemäße Verfahren dient zum Verringern einer Reflexion beim Betreiben eines Head-up-Displays eines Kraftfahrzeugs, wobei das Head-up-Display ein Deckscheibenelement umfasst, durch das ein Projektionsstrahlengang einer Projektion aus einem Gehäuse des Head-up-Displays austritt. Das Head-up-Display umfasst weiterhin ein Abblendelement, beispielsweise eine Spiegelbank und/oder eine Blende, das zum Abblenden eines von dem Deckscheibenelement umgelenkten Lichtstrahls eines Umgebungslichts des Kraftfahrzeugs ausgelegt ist. Die zu verringernde Reflexion ist dabei also diejenige Reflexion, die durch das Umlenken des Lichtstrahls des Umgebungslichts, beispielsweise eines Sonnenstrahls, oder Streulicht eines Sonnenstrahls den Fahrer blenden kann.

Eine Steuereinrichtung des Head-up-Displays, beispielsweise ein Steuergerät oder ein Mikrochip zum Steuern des Head-up-Displays, ermittelt dabei einen Strahlengang des umgelenkten Lichtstrahls und erfasst eine aktuelle Position und eine Ausrichtung des Abblendelements. Weiterhin ermittelt die Steuereinrichtung einen von dem umgelenkten Lichtstrahl freizuhaltenden Bereich um einen Augpunkt des Benutzers des Kraftfahrzeugs, ermittelt also einen sogenannten "reflexionsfreien Bereich" um ein Benutzerauge. In Abhängigkeit von dem ermittelten Strahlengang und der erfassten Position des Abblendelements ermittelt die Steuereinrichtung, ob der umgelenkte Lichtstrahl durch den freizuhaltenden Bereich führt. Falls dies der Fall ist, erzeugt die Steuereinrichtung ein Steuersignal zum Einstellen einer Position des Abblendelements, indem der umgelenkte Lichtstrahl abgeblendet wird. Es erfolgt ein Einstellen der Position des Abblendelements, in der der umgelenkte Lichtstrahl nicht mehr durch den freizuhaltenden Bereich führt. Dadurch nimmt das Abblendelement eine Abblendposition ein. Das Einstellen der Position wird durch eine Verstelleinrichtung des Head-up-Displays in Abhängigkeit von dem Steuersignal durchgeführt. Führt der Strahlengang nicht durch den freizuhaltenden Bereich, kann das Abblendelement in eine Position gebracht werden, in der das Abblendelement nicht mehr in einer Abblendposition ist. Dadurch kann das Abblendelement aus dem Sichtfeld des Fahrers entfernt werden.

Das Abblendelement muss hierdurch nur im Bedarfsfall in eine Abblendposition gebracht werden, sodass bei allen anderen Sonnenstandspositionen eine Sicht auf das Abblendelement für den Fahrer nahezu vollständig verhindert werden kann. Durch die Variabilität des Abblendelements ist es möglich, das Head-up-Display auch übergreifend in anderen Schalttafeln zu verbauen, ohne dass das Abblendelement dabei konstruktiv neu gestaltet werden muss. Hierdurch wird ermöglicht, dass auch andere Bauräume für das Head-up-Display oder auch nur für das Abblendelement verwendet werden kann. Für Benutzer, die die Struktur des Head-up-Displays als störend empfinden, kann das Head-up-Display somit auch an einer anderen Stelle, wo es nicht im sichtbaren Bereich ist, montiert werden. Durch die Variabilität des Abblendelements ist es weiterhin möglich, den reflexionsfreien Bereich variabel zu gestalten. Die Gestaltung kann dabei beispielsweise variabel für die Augposition des Benutzers und/oder auch zum Erweitern des reflexionsfreien Bereiches erfolgen.

Weiterhin muss das Head-up-Display keine zusätzliche teure und aufwendige Optik wie eine spezielle Linse oder ein spezielles Prisma aufweisen. Im Gegensatz zu einem Head-up-Display mit einem ortsfesten Abblendelement muss nicht das gesamte Head-up-Display in einem Bauraum der Hutze versenkt werden, sodass der Montageaufwand reduziert wird. Durch die Verstellmöglichkeit des Abblendelements verschmilzt dieses mit dem Kraftfahrzeugcockpit.

Gemäß einer besonders bevorzugten Ausführungsform des erfindungsgemäßen Verfahrens kann die Steuereinrichtung einen Umweltparameter ermitteln, der den Strahlengang und/oder eine Lichtstärke des Umgebungslichts beeinflusst, um zu ermitteln, ob der umgelenkte Lichtstrahl durch den freizuhaltenden Bereich führt, und/oder um den Strahlengang zu ermitteln. Ein solcher Umweltparameter kann beispielsweise eine Lichtstärke des Sonnenlichts, ein Wetter und damit aktuelle Helligkeitsverhältnisse oder einen Sonnenstand beschreiben. Hierdurch kann die Steuereinrichtung schnell und direkt auf einen Einfluss von außen reagieren. Hierzu können gemäß einer Weiterbildung dieser Ausführungsform vorhandene Sensoren und/oder bereits vorhandene Kommunikationssysteme des Kraftfahrzeugs genutzt werden, indem die Steuereinrichtung den Umweltparameter anhand eines den Umweltparameter beschreibenden Signals einer Sensoreinrichtung des Kraftfahrzeugs und/oder einer Datenkommunikationseinrichtung des Kraftfahrzeugs ermitteln kann. Das Signal kann beispielsweise von einem Sonnenstandssensor des Kraftfahrzeugs oder von einem internetfähigen Datenkommunikationsgerät des Kraftfahrzeugs erfasst und an die Steuereinrichtung übertragen werden. Im Falle einer Datenkommunikationseinrichtung des Kraftfahrzeugs kann beispielsweise eine Information eines Wetterdienstes aus dem Internet als beschreibendes Signal dienen.

Der von dem umgelenkten Lichtstrahl freizuhaltende Bereich hängt von einer Sitzposition und einer Position der Augen des Benutzers ab. Die Sensoreinrichtung, die beispielsweise zum Erkennen einer Augenposition ausgelegt ist, kann gemäß einer weiteren Ausführungsform des erfindungsgemäßen Verfahrens eine Körperposition und/oder eine Augenposition des Benutzers erfassen, anhand derer das Ermitteln des freizuhaltenden Bereichs erfolgen kann. Hierdurch werden die individuellen Bedürfnisse des Benutzers berücksichtigt, das heißt, dass der freizuhaltende Bereich individuell auf den Benutzer zugeschnitten werden kann. Dadurch kann ebenfalls ein Verändern einer Körperposition des Fahrers während einer Fahrt berücksichtigt werden.

Um das Head-up-Display besonders bauraumsparend zu gestalten, kann gemäß einer weiteren bevorzugten Ausführungsform des erfindungsgemäßen Verfahrens das Einstellen der Position des Abblendelements durch Verschieben des Abblendelements entlang einer vorgegebenen Erstreckungsebene und/oder durch Drehen des Abblendelements um einen vorgegebenen Drehpunkt erfolgen.

Der Benutzer kann während einer Fahrt zusätzlich das Bedürfnis verspüren, das Abblendelement nach einem persönlichen Empfinden zu verstellen. Hierzu kann gemäß einer weiteren Ausführungsform vorgesehen sein, dass ein Empfangen einer Bedienhandlung des Benutzers zum Einstellen der Position des Abblendelements, beispielsweise mittels einer Benutzerschnittstelle, erfolgen und in Abhängigkeit der empfangenen Bedienhandlung das Steuersignal erzeugt werden kann.

Beispielsweise für Kraftfahrzeuge, die nicht über eine geeignete Sensoreinrichtung verfügen, kann vorgesehen sein, dass das Ermitteln des Strahlengangs des umgelenkten Lichtstrahls durch ein Prädizieren des Strahlengangs anhand einer durch eine Navigationseinrichtung vorgegebenen Navigationsroute erfolgen kann. Dies ermöglicht ein vorausschauendes Steuern des Abblendelements und ermöglicht ein rechtzeitiges Abblenden.

Falls der umgelenkte Lichtstrahl durch den freizuhaltenden Bereich führt, kann zusätzlich ein Steuersignal durch die Steuereinrichtung erzeugt werden, das zum Einstellen einer Position einer zusätzlichen Blende zum Abblenden des umgelenkten Lichtstrahls durch die Verstelleinrichtung dienen kann. Eine Position der Blende, in der sie sich in einer Abblendposition befindet, kann ebenfalls durch die Verstelleinrichtung in Abhängigkeit von dem Steuersignal eingestellt werden. Hierdurch wird ein zusätzlicher Schutz vor einem Blenden bereitgestellt, und auch die genannte Blende kann in einem Bauraum möglichst platzsparend integriert werden.

Die oben gestellte Aufgabe wird ebenfalls gelöst durch ein Head-up-Display, das ein Abblendelement umfasst, sowie eine Verstelleinrichtung und eine Steuereinrichtung, die jeweils dazu ausgelegt sind, das erfindungsgemäße Verfahren gemäß einem der oben beschriebenen Ausführungsformen durchzuführen. Das Head-up-Display umfasst auch ein Deckscheibenelement, durch das ein Projektionsstrahlengang einer Projektion aus einem Gehäuse des Head-up-Displays austritt.

Vorzugsweise kann die Steuereinrichtung dazu ausgelegt sein, aus einer Sensoreinrichtung ein Signal zu empfangen, das eine erfasste Körperposition und/oder einer Augenposition des Benutzers beschreibt; und kann dazu ausgelegt sein, anhand des empfangenen Signals den freizuhaltenden Bereich zu ermitteln.

Die obenstehende Aufgabe wird ebenfalls gelöst von einem Kraftfahrzeug, das ein erfindungsgemäßes Head-up-Display umfasst. Ein erfindungsgemäßes Head-up-Display muss nicht zwangsläufig in einer Hutze über dem Kombiinstrument angeordnet werden, sondern kann beispielsweise an einer anderen Stelle der Innenverkleidung des Kraftfahrzeugs eingebaut werden. Dies ermöglicht zudem auch, dass das Head-up-Display nicht von dem Automobilhersteller eingebaut werden muss, sondern auch von einem Benutzer eingebaut werden kann. Sowohl für das erfindungsgemäße Head-up-Display, als auch für das erfindungsgemäße Kraftfahrzeug, vorzugsweise einen Kraftwagen, wie beispielsweise einem Personenkraftwagen, ergeben sich zudem die bereits oben genannten Vorteile.

Die Erfindung wird anhand der beigefügten Zeichnungen noch einmal durch konkrete Ausführungsbeispiele näher erläutert. Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in den Figuren dieselben Bezugszeichen auf. Es zeigt.
- Fig. 1: eine schematische Skizze zu einer Ausführungsform des erfindungsgemäßen Verfahrens,
- Fig. 2: eine schematische Skizze zu einer weiteren Ausführungsform des erfindungsgemäßen Verfahrens,
- Fig. 3: eine schematische Skizze zu einer dritten Ausführungsform des erfindungsgemäßen Verfahrens, und
- Fig. 4: eine schematische Skizze zu einer weiteren Ausführungsform des erfindungsgemäßen Verfahrens.

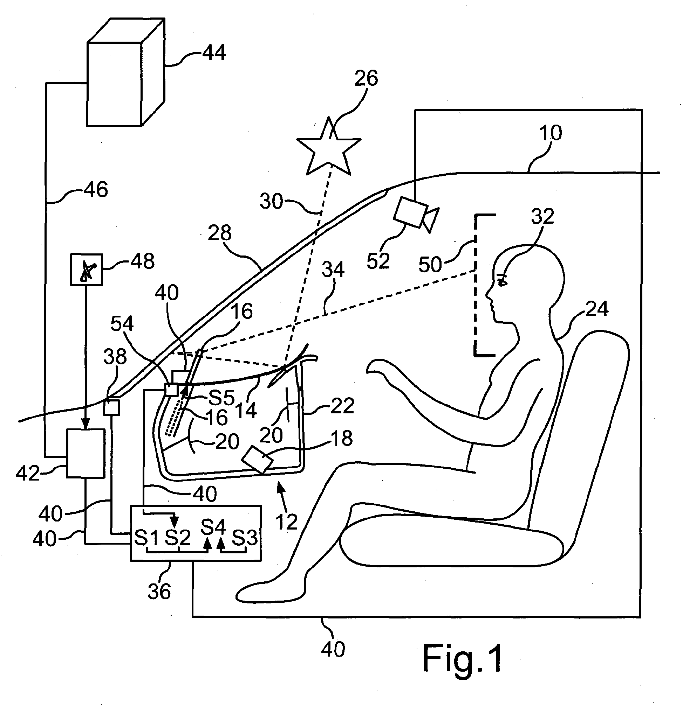

Anhand des Ausführungsbeispiels der Fig. 1 wird das Prinzip des erfindungsgemäßen Verfahrens dargestellt. Die Fig. 1 zeigt ein Kraftfahrzeug 10, vorzugsweise einen Kraftwagen wie beispielsweise einen Personenkraftwagen. Das Kraftfahrzeug 10 umfasst ein Head-up-Display 12, das ein Deckscheibenelement 14 und ein Abblendelement 16, beispielsweise winw Spiegelbank. Die beispielhafte Spiegelbank kann dabei beispielsweise als Absorberfläche ausgestaltet sein und hierzu beispielsweise eine matte schwarze Oberfläche zum Absorbieren von Licht aufweisen. Das Deckscheibenelement 14 kann dabei vorzugsweise als transparente Deckscheibe ausgestaltet sein, die ein Durchtreten einer Projektion einer Projektionsvorrichtung 18 des Head-up-Displays 12 und gleichzeitig ein Ablenken des Umgebungslichts ermöglicht. Das Head-up-Display 12 in der Fig. 1 zeigt zur Veranschaulichung die Projektionsvorrichtung 18, beispielsweise einen Projektor, sowie zwei optionale Spiegel 20 zum Umlenken des Projektionsstrahls. Das Head-up-Display 12 kann dabei ebenfalls ein Gehäuse 22 umfassen und in einer Hutze eines Innenraumverkleidungsteils des Kraftfahrzeugs 10 angeordnet sein.

Das Abblendelement 16 kann vorzugsweise als Spiegelbank oder Blende oder Spiegelbank-Blenden-Kombination ausgestaltet sein. Das Abblendelement 16 kann in einer Ruheposition beispielsweise innerhalb des Gehäuses 22 angeordnet vorliegen.

Die Fig. 1 zeigt ebenfalls einen Benutzer 24 des Kraftfahrzeugs 10 und eine Umgebungslichtquelle 26, beispielsweise die Sonne, deren Licht durch eine Windschutzscheibe 28 des Kraftfahrzeugs 10 scheinen und, beispielsweise in Abhängigkeit von einem Sonnenstand, den Benutzer 24 durch Reflexion des Sonnenlichts 30 blenden kann. In Abhängigkeit von beispielsweise dem Sonnenstand kann der Lichtstrahl 30 beispielsweise von dem Deckscheibenelement 14 so abgelenkt werden, dass dieser auf die Windschutzscheibe 28 treffen kann und wiederum in ein Auge 32 des Benutzers 24 umgelenkt werden kann. Das Blenden ist in der Fig. 1 durch den als gestrichelte Linie dargestellten Strahlengang 34, über den der Lichtstrahl 30 in das Auge 32 gelangen könnte, veranschaulicht.

Dieser Strahlengang 34 des umgelenkten Lichtstrahls 30 wird gemäß dem erfindungsgemäßen Verfahren durch eine Steuereinrichtung 36 des Head-up-Displays 12 ermittelt. Die Steuereinrichtung 36 kann beispielsweise als Mikrochip oder Mikrocontroller des Head-up-Displays 12 oder als Steuergerät des Head-up-Displays 12 ausgestaltet sein. Zum Ermitteln des Strahlengangs 34 (Verfahrensschritt S1) kann die Steuereinrichtung 36 beispielsweise ein Signal einer Sensoreinrichtung 38 des Kraftfahrzeugs 10 empfangen, wobei die Sensoreinrichtung 38 beispielsweise einen Sonnensensor umfasst, also einen Sensor, der eine Richtung und/oder eine Stärke und/oder eine Dauer der Sonneneinstrahlung bestimmen kann. Das Signal der Sensoreinrichtung 38 kann dann beispielsweise über eine drahtlose oder drahtgebundene Kommunikationsverbindung 40 von der Sensoreinrichtung 38 an die Steuereinrichtung 36 übertragen werden. Als beispielhafte drahtgebundene Kommunikationsverbindung 40 kann beispielsweise ein CAN-Bus ("Controller Area Network-Bus") oder ein anderes, dem Fachmann bekanntes serielles Bussystem verwendet werden. Die beispielhafte Sensoreinrichtung 38 der Fig. 1 kann zum Beispiel einen Solarsensor umfassen und an einer Motorhaube oder einem Seitenspiegel des Kraftfahrzeugs 10 angeordnet sein. Zusätzlich oder alternativ kann die Steuereinrichtung 36 ein Signal einer Datenkommunikationseinrichtung 42 des Kraftfahrzeugs 10 empfangen, wobei die Datenkommunikationseinrichtung 42 des Kraftfahrzeugs 10 beispielsweise einen GPS-Empfänger als Navigationseinrichtung oder ein internetfähiges Kommunikationsgerät des Kraftfahrzeugs 10 umfassen kann. Letzteres ermöglicht das Empfangen von beispielsweise Wetterdaten von einem kraftfahrzeugexternen Datenserver 44, die beispielsweise über eine Internetverbindung 46 übertragen werden können. Ist die Datenkommunikationseinrichtung 42 beispielsweise als Navigationseinrichtung ausgestaltet, kann diese ein Satellitensignal 48 empfangen und daraus einen Standort des Kraftfahrzeugs 10 ermitteln.

Dazu kann das Abblendelement 16 über eine drahtlose oder drahtgebundene Kommunikationsverbindung 40 mit der Steuereinrichtung 36 gekoppelt sein, wobei beispielsweise ein Positionssensor des Abblendelements 16 ein Signal, das die aktuelle Position und/oder die aktuelle Ausrichtung des Abblendelements 16 beschreiben kann, an die Steuereinrichtung 36 übertragen kann. Die Steuereinrichtung 36 kann dann beispielsweise anhand dieses Signals die aktuelle Position und die aktuelle Ausrichtung ermitteln (S2).

Die Steuereinrichtung 36 ist weiterhin dazu ausgelegt, beispielsweise anhand eines Signals einer Sensoreinrichtung 52 zum Erfassen einer Körperposition und/oder einer Augenposition des Benutzers 24 einen von dem umgelenkten Lichtstrahl 30 freizuhaltenden Bereich 50 um den Augpunkt 32 des Benutzers 24 zu ermitteln (S3). Diese Sensoreinrichtung 52 kann beispielsweise als Stereokamera und/oder als Augenpositionssensor ausgestaltet und beispielsweise an einem Dachhimmel des Kraftfahrzeugs 10 angebracht sein. Der von dem umgelenkten Lichtstrahl freizuhaltende Bereich 50 ist derjenige Bereich, in dem Streulicht auftreten könnte, das den Benutzer 24 blenden könnte und der deswegen von Streulicht und/oder Reflexionen freizuhalten ist. Eine Abmessung von dem freizuhaltenden Bereich 50 kann dabei ein in der Steuereinrichtung 36 hinterlegter, vorgegebener Wert sein, der beispielsweise einen Bereich im Kopfbereich oder beispielsweise einen Bereich mit einem beispielhaften Radius von 20 Zentimetern um den Augpunkt 32 des Benutzers 24 aufweisen kann. Der freizuhaltende Bereich 50 kann insbesondere von einer Körpergröße des Benutzers 24 abhängen, wie die Steuereinrichtung 26 anhand des Signals der Sensoreinrichtung 52, die die Körperposition und/oder die Augenposition des Benutzers 24 erfasst, ermittelt werden kann.

Dabei kann die Sensoreinrichtung 52 zur Positionserkennung beispielsweise räumliche Koordinaten des Augpunkts 32 des Benutzers 24 in einem Koordinationssystem, in dem beispielsweise ein Innenraum des Kraftfahrzeugs 10 erfasst werden kann, erfassen. Dieses Koordinationssystem kann beispielsweise in der Sensoreinrichtung 52 zur Positionserkennung vorprogrammiert vorliegen oder anhand eines Referenzobjekts in dem Innenraum von der Sensoreinrichtung 52 zur Positionserkennung ermittelt werden. Anhand des ermittelten Strahlengangs 34, der aktuellen Position und/oder der aktuellen Ausrichtung des Abblendelements 16 und des ermittelten freizuhaltenden Bereichs 50 erfasst die Steuereinrichtung 26, ob der umgelenkte Lichtstrahl 30 durch den freizuhaltenden Bereich 50 führt (S4). Hierzu kann ebenfalls eine Information über eine Position des Deckscheibenelements 14 verwendet werden, in der im Beispiel der Fig. 1 der Lichtstrahl 30 umgelenkt wird.

Zusätzlich oder alternativ kann die Steuereinrichtung 26 einen Umweltparameter berücksichtigen, wobei der Umweltparameter beispielsweise den Sonnenstand und/oder eine Lichtstärke des Umgebungslichts beeinflusst. Dieser Umweltparameter kann beispielsweise durch ein Signal der Sensoreinrichtung 38 beschrieben werden, das beispielsweise den Sonnenstand beschreibt, oder es kann sich bei dem Signal um ein Signal der Datenkommunikationseinrichtung 43 handeln, das beispielsweise eine Wetterinformation beschreibt. Aus der beispielhaften Wetterinformation kann die Steuereinrichtung 36 dann beispielsweise ermitteln, ob die Sonne überhaupt scheint und ob überhaupt das Umgebungslicht stark genug ist, eine Reflexion zu erzeugen.

Ergibt dieser Vorgang, dass der umgelenkte Lichtstrahl 30 durch den freizuhaltenden Bereich 50 führt, erzeugt die Steuereinrichtung 36 ein Steuersignal zum Einstellen einer Position des Abblendelements 16. Die Position ist dabei eine Position, in der das Abblendelement 16 den umgelenkten Lichtstrahl 30 abblendet, also als Abblendposition bezeichnet wird, oder eine Ruheposition, in der sich das Abblendelement nicht mehr im Sichtfeld des Benutzers befindet. Hierzu überträgt die Steuereinrichtung 36 das Steuersignal an eine Verstelleinrichtung 54 des Head-up-Displays 12. Die Verstelleinrichtung ist dabei eine Einrichtung oder ein Gerät, die oder das dazu ausgelegt ist, in Abhängigkeit von dem Steuersignal das Abblendelement 16 in seiner Position beispielsweise durch einen Motor der Verstelleinrichtung 54 zu ändern.

Die Fig. 1 zeigt dabei beispielhaft eine erste Position des Abblendelements 16, in der das Abblendelement 16 mit Hilfe einer gestrichelten Linie dargestellt ist. Die Verstelleinrichtung 54 kann zum Einstellen der Abblendposition beispielsweise mit Hilfe eines Motors einen Seilzug betreiben, der beispielsweise das Abblendelement 16 aus einer Ruheposition (als gestrichelte Linie dargestellt) in eine Abblendposition (als durchgehende Linie gezeigt) verfährt.

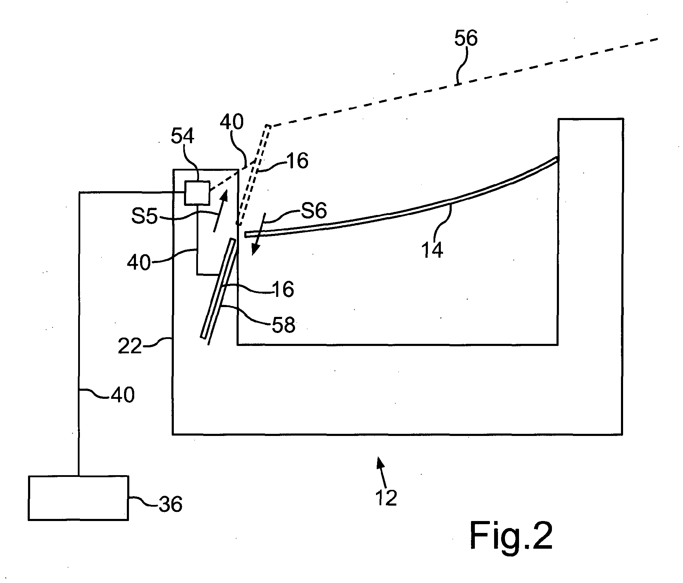

Die Verstelleinrichtung 54 kann beispielsweise einen elektrischen und/oder mechanischen und/oder pneumatischen Mechanismus zum Verstellen der Abblendeinrichtung 16 betreiben. Dies kann beispielsweise mit Hilfe einer Zahnstangenkonstruktion, einer Rastvorrichtung oder einer Klemmvorrichtung erfolgen. Die genannten Vorrichtungen zum Einstellen der Position des Abblendelements 16 eignen sich für ein besonders bevorzugtes Ausführungsbeispiel, bei dem das Einstellen der Position des Abblendelements 16 durch ein Verschieben des Abblendelements 16 entlang einer vorgegebenen Erstreckungsebene, beispielsweise entlang einer Schiene 58, erfolgen kann. Dieses Ausführungsbeispiel ist noch einmal konkret in der Fig. 2 dargestellt. Mittels eines solchen Verschiebemechanismus kann das Abblendelement 16 von einer ersten Position, in der das Abblendelement 16 beispielsweise in dem Gehäuse 22 des Head-up-Displays 12 eingefahren ist (in der Fig. 2 als durchgehende Linie gezeigt) in eine Abblendposition (in der Fig. 2 als gestrichelte Linie dargestellt) verschoben werden, in der das Abblendelement 16 im Sichtfeld 56 des Benutzers 24 liegt. Das Head-up-Display 12 der Fig. 2 ist dabei, der Übersicht wegen, ohne die Projektionsvorrichtung 18 oder die Spiegel 20 dargestellt. Die Fig. 2 zeigt ebenfalls beispielhaft die optionale Schiene 58, entlang der beispielsweise das Abblendelement 16 verfahren werden kann. Im Bedarfsfall, also wenn der Strahlengang 34 des Umgebungslichtstrahls 30 nicht mehr durch den freizuhaltenden Bereich 50 führt, kann das Abblendelement 16 dann wieder von der Abblendposition in die Ruheposition rückgeführt werden (S6).

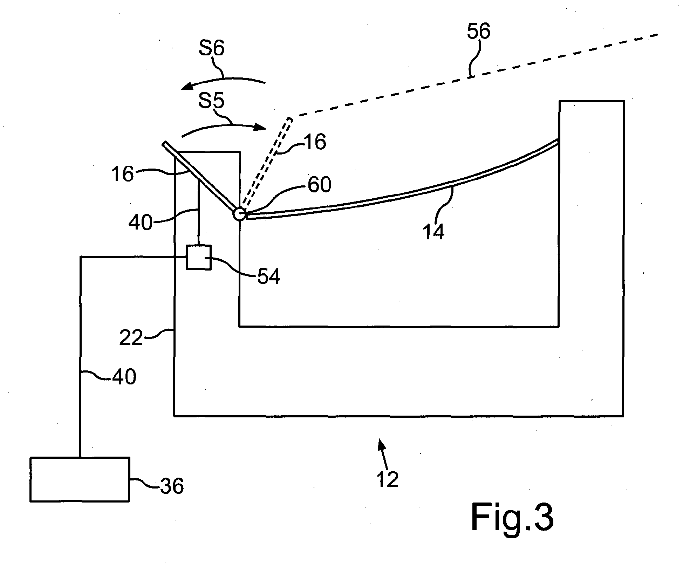

Die Fig. 3 zeigt ein weiteres Ausführungsbeispiel zu einem weiteren bevorzugten Verstellmechanismus des Abblendelements 16. Es wird dabei im Folgenden nur auf die Unterschiede zu dem Beispiel der Fig. 2 eingegangen. Gemäß dem Beispiel der Fig. 3 erfolgt das Einstellen der Position durch Drehen des Abblendelements 16 um einen vorgegebenen Drehpunkt 60. In einer Ruheposition kann das Abblendelement 16 beispielsweise in das Gehäuse 22 des Head-up-Displays 12 eingeklappt sein. Dazu kann beispielsweise eine entsprechend geformte Vertiefung in dem Gehäuse 22 vorgesehen sein. Ein Motor der Verstelleinrichtung 54 kann dazu beispielsweise das Abblendelement 16 um den Drehpunkt 60 drehen. Dieses Ausführungsbeispiel stellt ein bevorzugtes Ausführungsbeispiel dar, da für dieses Ausführungsbeispiel nur ein kleiner Motor verwendet werden müsste. Der Motor kann dann beispielsweise eine Kurbel, einen Seilzug oder eine Welle bewegen.

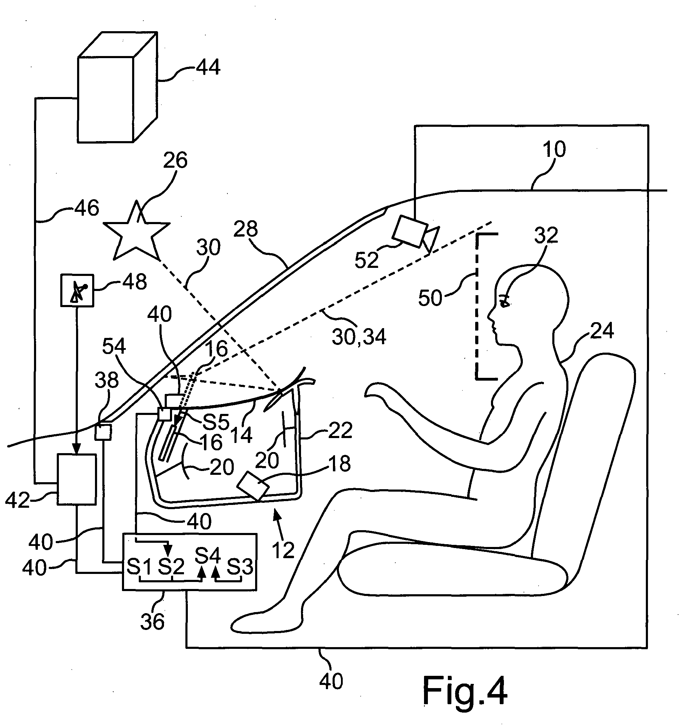

Die Fig. 4 zeigt ein weiteres Ausführungsbeispiel des erfindungsgemäßen Verfahrens. Hierbei wird im Folgenden nur noch auf die Unterschiede zu den bereits beschriebenen Verfahren der Fig. 1 eingegangen.

Im Beispiel der Fig. 4 sind Lichtverhältnisse in dem Kraftfahrzeug 10 gezeigt, die nach einer Änderung des beispielhaften Sonnenstands vorliegen können. Die Sonne als Umgebungslichtquelle 26 steht dabei beispielsweise tiefer am Himmel. Der Lichtstrahl 30 trifft somit in einem anderen Einfallswinkel auf das Deckscheibenelement 14 auf. Hierdurch ändert sich der Strahlengang 34, sodass nach dem Umlenken des Lichtstrahls 30 von der Windschutzscheibe 28 der Lichtstrahl nicht mehr durch den freizuhaltenden Bereich 50 führen kann. Ermittelt dies die Steuereinrichtung 36, so kann die Steuereinrichtung 36 ein Steuersignal erzeugen, das das Verfahren des Abblendelements 16 aus der Abblendposition (dargestellt als gestrichelte Linie) in eine Ruheposition (als durchgezogene Linie des Abblendelements 16 dargestellt) beschreiben kann. Dies kann, wie beispielsweise bereits zu Fig. 2 und zu Fig. 3 beschrieben, durch Verschieben des Abblendelements in beispielsweise einen hierfür passend ausgestalteten Schacht des Gehäuses 22 (S5) erfolgen.

Es kann erfindungsgemäß vorgesehen sein, dass der Benutzer 24 beispielsweise über eine Benutzerschnittstelle eines Infotainmentsystems ein Einstellen der Position des Abblendelements 16 auswählen kann. In Abhängigkeit der Bedienhandlung, beispielsweise eines Tastendrucks, kann das Steuersignal dann erzeugt werden. Weiterhin kann vorgesehen sein, dass die Datenkommunikationseinrichtung 42 eine Navigationseinrichtung, beispielsweise ein Navigationsgerät, umfasst und der Strahlengang 34 anhand einer programmierten Navigationsroute prädiziert wird. Hierzu können der relevante Umweltparameter und/oder eine Information zu der Uhrzeit der Reise von der Steuereinrichtung 26 verwendet werden.

Die oben angeführten Ausführungsbeispiele veranschaulichen das Prinzip der Erfindung, ein adaptives Abblendelement 16, vorzugsweise eine Spiegelbank, bereitzustellen mittels einer Verstellmöglichkeit am Head-up-Display 12.

Dabei veranschaulicht die Fig. 1, wie das Einstellen der Abblendposition des Abblendelements 16, der beispielhaften Spiegelbank, bei beispielsweise einer hohen Sonnenstellung eine Reflexion der Sonnenstrahlung in das Auge 32 des Benutzers 24 verhindern kann. Bei einem Ändern des beispielhaften Sonnenstandes verläuft der Strahlengang 34 des Lichtstrahls 30 beispielsweise außerhalb des freizuhaltenden Bereichs 50, also des sogenannten "reflexionsfreien Bereiches", und das Abblendelement 16 kann beispielsweise wieder in eine Ruheposition verstellt werden (Fig. 4).

Der Benutzer 24 kann gegebenenfalls auch eine Blende des Head-up-Displays 12 als störend empfinden. Dabei kann es sich beispielsweise um eine Blende handeln, die das Head-up-Display 12 in das Cockpit des Kraftfahrzeugs 10 einbindet und somit ebenfalls über dem Abblendelement 16 sitzen kann. Im Bereich des Abblendelements 16 kann diese Blende gemäß einem weiteren Ausführungsbeispiel an dem Abblendelement 16 montiert sein (in der Fig. 1 nicht gezeigt), sodass diese ebenfalls aus dem Sichtfeld des Benutzers 24 verfahren.

Mittels einer Sensortechnik am Kraftfahrzeug 10, also mittels der Sensoreinrichtung 38, und/oder beispielsweise einer Informationsübermittlung via GPS und/oder durch beispielsweise Sonnenstand und/oder Wetterdaten kann das Abblendelement 16, die beispielhafte Spiegelbank, welche eine entsprechende Kinematik besitzt, so eingestellt werden, dass diese beispielsweise je nach Sonnenstellung eine sichtbare Wandung positioniert werden kann.

Gibt es also den Fall, dass die beispielhafte Sonneneinstrahlung beispielsweise ein Verschieben und/oder ein Drehen des Abblendelements 16 zulässt, so kann das Abblendelement 16 so verschoben oder verdreht werden, dass die Sicht auf den entsprechenden Bereich (auf das Loch der Lichtfalle) verhindert oder reduziert wird. Vorzugsweise kann das Abblendelement 16 dabei mittels eines Drehpunkts 60 (Fig. 3) und/oder mittels eines Schiebemechanismus (Fig. 2) eingestellt werden.

Um also eine Sicht des Benutzers 24 auf das Abblendelement 26 zu verhindern oder zu reduzieren, wird eine Verstellmöglichkeit an dieser vorgesehen.

Daraus ergeben sich die folgenden Vorteile:
- Das Abblendelement 16 kann nur im Bedarfsfall in die sogenannte "Worst-Case-Position" gebracht werden, also in die Position, in der der Benutzer 24 ohne das Abblendelement 16 geblendet würde, sodass beispielsweise bei allen anderen Sonnenstandspositionen die Sicht auf das Abblendelement 16 für den Benutzer 24 verhindert oder reduziert wird.
- Durch die Variabilität des Abblendelements 16 ist es möglich, das Head-up-Display 12 auch übergreifend in anderen Schalttafeln zu verbauen, ohne dass das Abblendelement 16 dabei konstruktiv neu gestaltet werden muss.
- Durch die Variabilität des Abblendelements 16 ist es möglich, den freizuhaltenden Bereich 50, also den reflexionsfreien Bereich, variabel zu gestalten, beispielsweise variabel für die Augposition 32 des Benutzers 24 und auch zum Erweitern des freizuhaltenden Bereichs 50.

## Patentansprüche

1. Verfahren zum Verringern einer Reflexion beim Betreiben eines Head-up-Displays (12) eines Kraftfahrzeugs (10), wobei das Head-up-Display (12) ein Deckscheibenelement (14) umfasst, durch das ein Projektionsstrahlengang einer Projektion aus einem Gehäuse (22) des Head-up-Displays (12) austritt, und das ein Abblendelement (16) umfasst, das zum Abblenden eines von dem Deckscheibenelement (14) umgelenkten Lichtstrahls (30) eines Umgebungslichts des Kraftfahrzeugs (10) ausgelegt ist, umfassend die durch eine Steuereinrichtung (36) des Head-up-Displays (12) durchgeführten Schritte:
- Ermitteln eines Strahlengangs (34) des umgelenkten Lichtstrahls (30, S1),
- Erfassen einer aktuellen Position und einer Ausrichtung des Abblendelements (16, S2),
- Ermitteln eines von dem umgelenkten Lichtstrahl (30) freizuhaltenden Bereichs (50) um einen Augpunkt (32) eines Benutzers (24) des Kraftfahrzeugs (10, S3),
- in Abhängigkeit von dem ermittelten Strahlengang (34) und der erfassten Position des Abblendelements (16) Ermitteln, ob der umgelenkte Lichtstrahl (30) durch den freizuhaltenden Bereich (50) führt (S4), und
- falls der umgelenkte Lichtstrahl (30) durch den freizuhaltenden Bereich (50) führt, Erzeugen eines Steuersignals zum Einstellen einer Position des Abblendelements (16) zum Abblenden des umgelenkten Lichtstrahls (30) durch eine Verstelleinrichtung (54) des Head-up-Displays (12),
und Einstellen einer Position des Abblendelements (16) durch die Verstelleinrichtung (54) in Abhängigkeit von dem Steuersignal (S5).

2. Verfahren nach Anspruch 1, **gekennzeichnet durch**
- durch die Steuereinrichtung (36) Ermitteln eines Umweltparameters, der den Strahlengang (30) und/oder eine Lichtstärke des Umgebungslichts beeinflusst, um den Strahlengang (34) zu ermitteln (S1).

3. Verfahren nach Anspruch 1 oder 2, **gekennzeichnet durch**
- durch die Steuereinrichtung (36) Ermitteln eines Umweltparameters, der den Strahlengang (30) und/oder eine Lichtstärke des Umgebungslichts beeinflusst, um zu ermitteln, ob der umgelenkte Lichtstrahl (30) durch den freizuhaltenden Bereich (50) führt.

4. Verfahren nach Anspruch 2 oder 3, **dadurch gekennzeichnet, dass**
die Steuereinrichtung (36) den Umweltparameter anhand eines den Umweltparameter beschreibenden Signals einer Sensoreinrichtung (52) des Kraftfahrzeugs (10) und/oder einer Datenkommunikationseinrichtung (42) des Kraftfahrzeugs (10) ermittelt.

5. Verfahren nach einem der vorhergehenden Ansprüche, **dadurch gekennzeichnet, dass**
das Einstellen der Position des Abblendelements (16, S5) durch Verschieben des Abblendelements (16) entlang einer vorgegebenen Erstreckungsebene und/oder Drehen des Abblendelements (16) um einen vorgegebenen Drehpunkt (60) erfolgt.

6. Verfahren nach einem der vorhergehenden Ansprüche, **gekennzeichnet durch**
- Empfangen einer Bedienhandlung des Benutzers (24) zum Einstellen der Position des Abblendelements (16) und in Abhängigkeit der empfangenen Bedienhandlung Erzeugen des Steuersignals.

7. Verfahren nach einem der vorhergehenden Ansprüche, **gekennzeichnet durch**
- Ermitteln des Strahlengangs (34) des umgelenkten Lichtstrahls (30, S1) durch Prädizieren des Strahlengangs anhand einer durch eine Navigationseinrichtung vorgegebenen Navigationsroute.

8. Verfahren nach einem der vorhergehenden Ansprüche, **gekennzeichnet durch**
- falls der umgelenkte Lichtstrahl (30) durch den freizuhaltenden Bereich (50) führt, Erzeugen eines Steuersignals zum Einstellen einer Position einer Blende zum Abblenden des umgelenkten Lichtstrahls (30) durch die Verstelleinrichtung (54), und
- Einstellen einer Position der Blende durch die Verstelleinrichtung (54) in Abhängigkeit von dem Steuersignal.

9. Verfahren nach einem der vorhergehenden Ansprüche, **gekennzeichnet durch**
- durch die Sensoreinrichtung (52): Erfassen einer Körperposition und/oder einer Augenposition des Benutzers (24) zum Ermitteln des freizuhaltenden Bereichs (50).

10. Head-up-Display (12), umfassend:
- ein Abblendelement (16),
- ein Deckscheibenelement (14), durch das ein Projektionsstrahlengang einer Projektion aus einem Gehäuse (22) des Head-up-Displays (12) austritt, sowie
- eine Verstelleinrichtung (54) und eine Steuereinrichtung (36), die dazu ausgelegt sind, ein Verfahren nach einem der Ansprüche 1 bis 8 durchzuführen.

11. Head-up-Display (12) nach Anspruch 10, wobei
die Steuereinrichtung (36) dazu ausgelegt ist, aus einer Sensoreinrichtung (52) ein Signal zu empfangen, das eine erfasste Körperposition und/oder eine Augenposition des Benutzers (24) beschreibt; und die dazu ausgelegt ist, anhand des empfangenen Signals den freizuhaltenden Bereich (50) zu ermitteln.

12. Kraftfahrzeug (10), umfassend ein Head-up-Display (12) nach Anspruch 10 oder 11.

## Claims

1. Method for reducing a reflection when operating a head-up display (12) of a motor vehicle (10), wherein the head-up display (12) comprises a covering disc element (14), through which a projection beam path of a projection emerges from a housing (22) of the head-up display (12) and which comprises a dimming element (16) designed to dim a light beam (30) of ambient light of the motor vehicle (10), said light beam being deflected by the covering disk element (14), comprising the following steps carried out by a control device (36) of the head-up display (12):
- determining a beam path (34) of the deflected light beam (30, S1),
- detecting a current position and an orientation of the dimming element (16, S2),
- determining a region (50) to be kept free of the deflected light beam (30) around an eye point (32) of a user (24) of the motor vehicle (10, S3),
- determining, depending on the determined beam path (34) and on the detected position of the dimming element (16), whether the deflected light beam (30) passes through the region (50) to be kept free (S4), and
- if the deflected light beam (30) passes through the region (50) to be kept free, generating a control signal for setting a position of the dimming element (16) in order to dim the deflected light beam (30) by means of an adjustment device (54) of the head-up display (12), and setting a position of the dimming element (16) by means of the adjustment device (54) depending on the control signal (S5).

2. Method according to claim 1, **characterised by**
- determining, using the control device (36), an environmental parameter which influences the beam path (30) and/or a light intensity of the ambient light in order to determine (S1) the light beam path (34).

3. Method according to claim 1 or 2, **characterised by**
- determining, using the control device (36), an environmental parameter which influences the beam path (30) and/or a light intensity of the ambient light in order to determine whether the deflected light beam (30) passes through the region (50) to be kept free.

4. Method according to claim 2 or 3, **characterised in that**
the control device (36) determines the environmental parameter on the basis of a signal, which describes the environmental parameter, of a sensor device (52) of the motor vehicle (10) and/or of a data communication device (42) of the motor vehicle (10).

5. Method according to any of the preceding claims, **characterised in that**
the setting of the position of the dimming element (16, S5) is performed by moving the dimming element (16) along a predetermined extension plane and/or by rotating the dimming element (16) about a predetermined pivot point (60).

6. Method according to any of the preceding claims, **characterised by**
- receiving a control operation of the user (24) for setting the position of the dimming element (16) and generating the control signal depending on the received control operation.

7. Method according to any of the preceding claims, **characterised by**
- determining the beam path (34) of the deflected light beam (30, S1) by predicting the beam path on the basis of a navigation route predetermined by a navigation device.

8. Method according to any of the preceding claims, **characterised by**
- generating, if the deflected light beam (30) passes through the region (50) to be kept free, a control signal for setting a position of a cover in order to dim the deflected light beam (30) using the adjustment device (54), and
- setting a position of the cover using the adjustment device (54) depending on the control signal.

9. Method according to any of the preceding claims, **characterised by**
- detecting, using the sensor device (52), a body position and/or an eye position of the user (24) in order to determine the region (50) to be kept free.

10. Head-up display (12), comprising:
- a dimming element (16),
- a covering disc element (14), through which a projection beam path of a projection emerges from a housing (22) of the head-up display (12), and
- an adjustment device (54) and a control device (36), which are designed to perform a method according to any of claims 1 to 8.

11. Head-up display (12) according to claim 10, wherein
the control device (36) is designed to receive a signal from a sensor device (52), which signal describes a detected body position and/or an eye position of the user (24), and which is designed to determine the region (50) to be kept free on the basis of the received signal.

12. Motor vehicle (10), comprising a head-up display (12) according to claim 10 or 11.

## Revendications

1. Procédé de diminution d'une réflexion lors du fonctionnement d'un affichage tête haute (12) d'un véhicule automobile (10), dans lequel l'affichage tête haute (12) comporte un élément formant plaque de recouvrement (14), par lequel un trajet de faisceau de projection d'une projection sort d'un boîtier (22) de l'affichage tête haute (12), et qui comporte un élément de masquage (16) qui est conçu pour le masquage d'un faisceau de lumière (30) dévié de l'élément formant plaque de recouvrement (14) d'une lumière ambiante du véhicule automobile (10), comprenant les étapes réalisées par un dispositif de commande (36) de l'affichage tête haute (12) :
- la détermination d'un trajet de faisceau (34) du faisceau lumineux (30, S1) dévié,
- la détection d'une position actuelle et d'une orientation de l'élément de masquage (16, S2),
- la détermination d'une zone (50) à protéger du faisceau lumineux (30) dévié autour d'un point d'œil (32) d'un utilisateur (24) du véhicule automobile (10, S3),
- en fonction du trajet de faisceau (34) déterminé et de la position détectée de l'élément de masquage (16) la détermination si le faisceau lumineux (30) dévié traverse (S4) la zone à protéger (50), et
- si le faisceau lumineux (30) dévié traverse la zone à protéger (50), la génération d'un signal de commande pour le réglage d'une position de l'élément de masquage (16) pour le masquage du faisceau lumineux (30) dévié par un dispositif de réglage (54) de l'affichage tête haute (12),
et le réglage d'une position de l'élément de masquage (16) par le dispositif de réglage (54) en fonction du signal de commande (S5).

2. Procédé selon la revendication 1, **caractérisé par**
- par le dispositif de commande (36) la détermination d'un paramètre environnemental qui influence le trajet de faisceau (30) et/ou une intensité lumineuse de la lumière ambiante afin de déterminer (S1) le trajet de faisceau (34).

3. Procédé selon la revendication 1 ou 2, **caractérisé par**
- par le dispositif de commande (36) la détermination d'un paramètre environnemental qui influence le trajet de faisceau (30) et/ou une intensité lumineuse de la lumière ambiante afin de déterminer si le faisceau lumineux (30) dévié traverse la zone (50) à protéger.

4. Procédé selon la revendication 2 ou 3, **caractérisé en ce que**
le dispositif de commande (36) détermine le paramètre environnemental au moyen d'un signal décrivant le paramètre environnemental d'un dispositif de capteur (52) du véhicule automobile (10) et/ou d'un dispositif de communication de données (42) du véhicule automobile (10).

5. Procédé selon l'une des revendications précédentes, **caractérisé en ce que**
le réglage de la position de l'élément de masquage (16, S5) est effectué par déplacement de l'élément de masquage (16) le long d'un plan d'étendue prescrit et/ou la rotation de l'élément de masquage (16) autour d'un point de rotation (60) prescrit.

6. Procédé selon l'une des revendications précédentes, **caractérisé par**
- la réception d'une manipulation de commande de l'utilisateur (24) pour le réglage de la position de l'élément de masquage (16) et en fonction de la manipulation de commande reçue la génération du signal de commande.

7. Procédé selon l'une des revendications précédentes, **caractérisé par**
- la détermination du trajet de faisceau (34) du faisceau lumineux (30, S1) dévié par prédiction du trajet de faisceau au moyen d'un itinéraire de navigation prescrit par un dispositif de navigation.

8. Procédé selon l'une des revendications précédentes, **caractérisé par**
- si le faisceau lumineux (30) dévié traverse la zone à protéger (50), la génération d'un signal de commande pour le réglage d'une position d'un diaphragme pour le masquage du faisceau lumineux (30) dévié par le dispositif de réglage (54), et
- le réglage d'une position de diaphragme par le dispositif de réglage (54) en fonction du signal de commande.

9. Procédé selon l'une des revendications précédentes, **caractérisé par**
- par le dispositif de capteur (52) : la détection d'une position de corps et/ou d'une position d'œil de l'utilisateur (24) pour la détermination de la zone à protéger (50).

10. Affichage tête haute (12) comprenant :
- un élément de masquage (16),
- un élément formant plaque de recouvrement (14), par lequel un trajet de faisceau de projection d'une projection sort d'un boîtier (22) de l'affichage tête haute (12), ainsi que
- un dispositif de réglage (54) et un dispositif de commande (36) qui sont conçus afin de réaliser un procédé selon l'une des revendications 1 à 8.

11. Affichage tête haute (12) selon la revendication 10, dans lequel
le dispositif de commande (36) est conçu afin de recevoir d'un dispositif de capteur (52) un signal qui décrit une position de corps détectée et/ou une position d'œil de l'utilisateur (24) ; et qui est conçu afin de déterminer au moyen du signal reçu la zone à protéger (50).

12. Véhicule automobile (10) comprenant un affichage tête haute (12) selon la revendication 10 ou 11.
